# EUROPÄISCHE PATENTSCHRIFT

(11) **EP 0 654 719 B1**
(45) Veröffentlichungstag und Bekanntmachung des Hinweises auf die Patenterteilung: **23.07.1997**
(21) Anmeldenummer: 93810804.0
(22) Anmeldetag: 19.11.1993
(51) Int. Cl.: G05B 19/042

(54) **Konfigurierbare Steuer- und Regeleinrichtung**
Configurable control and regulation device
Dispositif de commande et de régulation configurable

(43) Veröffentlichungstag der Anmeldung: 24.05.1995
(73) Patentinhaber: Landis & Gyr Technology Innovation AG, 6301 Zug (CH)
(72) Erfinder: Dierauer, Turi, CH-8910 Affoltern (CH); Gemsch, Leopold, CH-6423 Seewen (CH)
(74) Vertreter: Müller, Hans-Jürgen, Dipl.-Ing.

(56) Entgegenhaltungen:
- EP-A- 0 421 550
- EP-A- 0 503 256
- WO-A-90/06478
- DE-A- 3 838 715
- DE-A- 4 039 465
- US-A- 5 097 405

## Beschreibung

Die Erfindung bezieht sich auf eine konfigurierbare Steuer- und Regeleinrichtung der im Oberbegriff des Anspruchs 1 genannten Art.

Solche Steuer- und Regeleinrichtungen eignen sich beispielsweise zum Einsetzen in komplexen technischen Systemen, wobei Heizungs-, Lüftungs- und Klimaanlagen oder allgemein Gebäudeautomationsanlagen als Beispiel genannt seien, in welchen durch die Steuer- und Regeleinrichtungen insbesondere Raumklimagrössen beeinflusst werden.

Eine Steuer- und Regeleinrichtung der im Oberbegriff des Anspruchs 1 genannten Art ist aus der EP 0 503 256 A1 bekannt. Die Einrichtung weist einen Mikroprozessor, einen Programmspeicher, einen Datenspeicher und Schnittstellen-Baugruppen von und zu einer zu steuernden Anlage auf. Der Programmspeicher enthält eine begrenzte Zahl konfigurierbarer Steuer- und Regelmodule in Form von Funktionsblöcken einer Funktionsblock-Bibliothek, wobei das ablauffähige Programm aus einer Sequenz von Zugriffen auf diese Funktionsblöcke besteht. Die Anzahl der Funktionsblöcke in der Sequenz ist prinzipiell nicht begrenzt und die einzelnen Funktionsblöcke können grundsätzlich beliebig miteinander verknüpft werden, wodurch die Einrichtung in ihrem funktionellen Aufbau äusserst vielfältig variiert werden kann.

Der Erfindung liegt die Aufgabe zugrunde, eine konfigurierbare Steuer- und Regeleinrichtung zu schaffen, die hardwaremässig wenig Mittel erfordert und die mit wenig Aufwand für unterschiedliche Prozesse konfigurierbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung naner erläutert.

Es zeigen:
- Fig. 1: den prinzipiellen Aufbau einer konfigurierbaren Steuer- und Regeleinrichtung,
- Fig. 2: ein Datennetz mit zwei Exemplaren der Steuer- und Regeleinrichtung,
- Fig. 3: ein Datenfluss-Diagramm zur Steuer- und Regeleinrichtung,
- Fig. 4: ein Beispiel einer Anwendung der Steuer- und Regeleinrichtung in einem technischen System und
- Fig. 5: den zeitlichen Verlauf des Informationsflusses in einem Energiestellpfad.

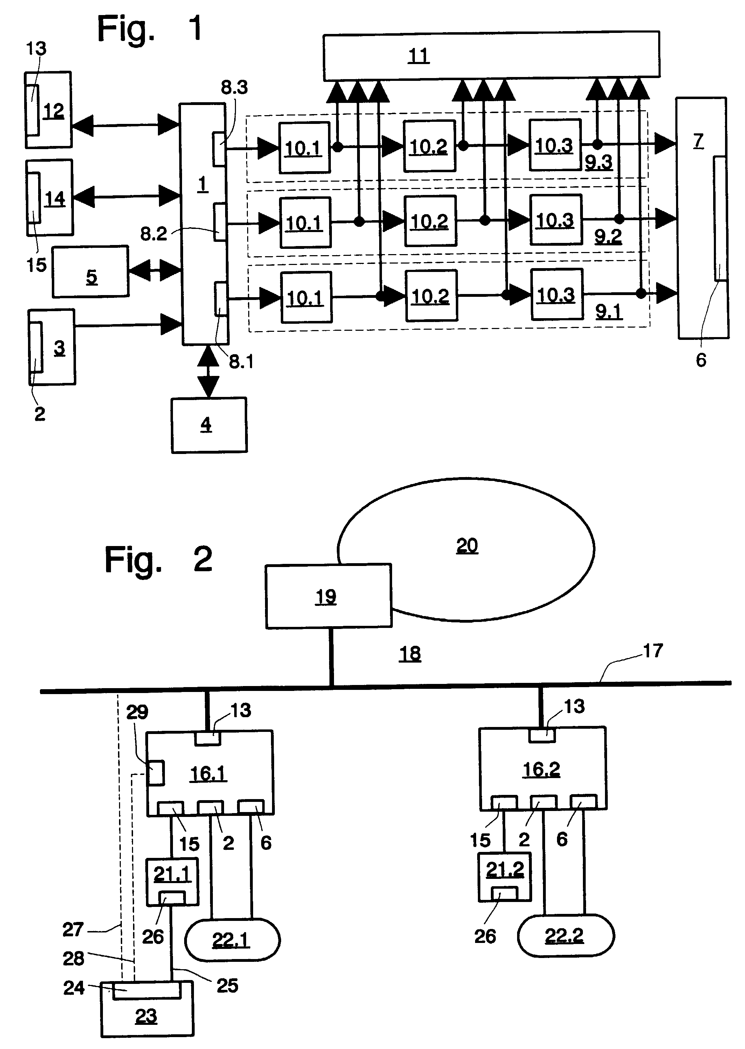

In der Fig. 1 bedeutet 1 eine Datenschnittstelle, die mit einem einen Eingang 2 für Messgrössen aufweisenden Eingabeblock 3, einem veränderbare Regelparameter aufweisenden Komfortregler 4 und einer Betriebszustands-Steuereinrichtung 5 verbunden ist.

In der konfigurierbaren Steuer- und Regeleinrichtung sind die Datenschnittstelle 1 und ein einen Ausgang 6 für Stellgrössen aufweisender Ausgabeblock 7 über eine vorbestimmte Anzahl p Energiestellpfade 9 miteinander verbunden, wobei die Anzahl p mindestens eins, in der Regel jedoch grösser als eins ist. Eingangsseitig eines Energiestellpfades 9 liegt jeweils eine in einem Konfigurierungsvorgang vordefinierbare Datenpunkt-Gruppe 8 der Datenschnittstelle 1.

Im dargestellten Beispiel beträgt die Anzahl p drei, womit die Datenschnittstelle 1 eine erste Datenpunkt-Gruppe 8.1 für einen ersten Energiestellpfad 9.1, eine zweite Datenpunkt-Gruppe 8.2 für einen zweiten Energiestellpfad 9.2 und eine dritte Datenpunkt-Gruppe 8.3 für einen dritten Energiestellpfad 9.3 aufweist, wobei die drei gestrichelt dargestellten Energiestellpfade 9.1, 9.2, und 9.3 jeweils ausgangsseitig zum Ausgabeblock 7 geführt sind.

Jeder Energiestellpfad 9.1 bzw. 9.2 bzw. 9.3 weist eine vorbestimmte Anzahl f sequentiell aneinandergereihter Funktionsblöcke 10.1 bis 10.f auf, welche in einer vorteilhaften Ausführung mindestens zum Teil ausgangsseitig zusätzlich mit einer Stellwerttabelle 11 verbunden sind. Die vorbestimmte Anzahl f ist den Anforderungen der Steuer- und Regeleinrichtung anpassbar, jedoch mit Vorteil in allen Energiestellpfaden 9.1 bis 9.p gleich gross.

Im dargestellten Beispiel beträgt die vorbestimmte Anzahl f drei, womit ein erster Funktionsblock 10.1 ausgangsseitig auf die Stellwerttabelle 11 und auf den Eingang eines zweiten Funktionsblockes 10.2 geführt ist Ausgangsseitig ist der zweite Funktionsblock 10.2 mit der Stellwerttabelle 11 und weiter mit dem Eingang eines ausgangsseitig ebenfalls mit der Stellwerttabelle 11 verbundenen dritten Funktionsblockes 10.3 verbunden.

Eine vorteilhafte Ausführung des Steuer- und Regeleinrichtung weist einen Schnittstellenblock 12 auf, welcher über einen Anschluss 13 an ein Übertragungmedium eines in der Fig. 1 nicht dargestellten Datennetzwerkes anschliessbar ist. Der Schnittstellenblock 12 ist mit der Stellwerttabelle 11 und auch mit der Datenschnittstelle 1 verbunden.

Mit Vorteil verfügt die Steuer- und Regeleinrichtung über einen weiteren Schnittstellenblock 14, der mit der Datenschnittstelle 1 verbundenen ist und der einen Anschluss 15 für ein in der Fig. 1 nicht gezeichnetes Raumgerät aufweist. Das Raumgerät weist in der Regel Bedienelemente auf - wie beispielsweise einen Schalter zur Wahl der Betriebsart oder der Solltemperatur - und dient üblicherweise auch als Raumtemperatur-Fühler.

Im weiteren ist die Datenschnittstelle 1 zusätzlich direkt mit dem Ausgabeblock 7 verbunden, wodurch - mit Vorteil beim Lokalisieren einer Störung manuell oder zur Sicherheit in einem Störfall selbsttätig - dem Ausgang 6 in vorteilhafter Weise von aussen über den Schnittstellenblock 12 oder über den Schnittstellenblock 14 vorbestimmte Daten aufprägbar sind, wobei der Komfortregler 4 und die Energiestellpfade 9.1 bis 9.3 über die Betriebszustands-Steuereinrichtung 5 ganz oder teilweise deaktivierbar sind.

Der Eingang 2 weist in der Regel mehrere Klemmen auf, welche je nach Bedarf teils als Analog-Eingang und teils als Digital-Eingang ausgelegt sind. Auch der Ausgang 6 weist üblicherweise mehrere Klemmen auf, welche zum Teil als Analog-Ausgang und zum Teil als Digital-Ausgang benutzbar sind.

In der Fig. 2 ist mit 16.1 ein erstes Exemplar und mit 16.2 ein zweites Exemplar der Steuer- und Regeleinrichtung bezeichnet. Ein Übertragungsmedium 17 eines Datennetzwerkes 18 ist mit dem Anschluss 13 des ersten Exemplars 16.1 bzw. mit dem Anschluss 13 des zweiten Exemplars 16.2 verbunden. Im weiteren ist das Übertragungsmedium 17 mit einem Knoten 19 eines den Exemplaren 16.1 bzw. 16.2 mit Vorteil übergeordneten Leitsystems 20 verbunden.

Das erste Exemplar 16.1 der Steuer- und Regeleinrichtung ist über den Anschluss 15 mit einem ersten Exemplar 21.1 des Raumgerätes und über den Eingang 2 bzw. den Ausgang 6 mit einem ersten zu steuemden und/oder zu regelnden technischen System 22.1 verbunden.

In gleicher Weise ist das zweite Exemplar 16.2 der Steuer- und Regeleinrichtung über den Anschluss 15 mit einem zweiten Exemplar 21.2 des Raumgerätes und über den Eingang 2 bzw. den Ausgang 6 mit einem zweiten zu steuernden und/oder zu regelnden technischen System 22.2 verbunden.

Das technische System 22.1 bzw. 22.2 ist vorzugsweise ein Raum mit einem Heiz- und/oder einem Kühlsystem mit Messfühlem und Stellgliedem.

Das den Knoten 19 und die beiden Exemplare 16.1 und 16.2 der Steuer- und Regeleinrichtung aufweisende Datennetzwerk 18 verfügt im allgemeinen über weitere Exemplare 16.k der Steuer- und Regeleinrichtung, welche zugunsten einer einfacheren Darstellung in der Fig. 2 jedoch nicht aufgeführt sind.

Eine Serviceeinrichtung 23 weist ein Kommunikationsglied 24 auf, welches in einer ersten Variante über eine erste Verbindungseinrichtung 25 mit einer Schnittstelle 26 des Raumgerätes 21.1 oder in einer zweiten Variante über eine zweite Verbindungseinrichtung 27 mit dem Übertragungsmedium 17 oder in einer dritten Variante über eine dritte Verbindungseinrichtung 28 mit einem Serviceanschluss 29 verbunden ist, wobei die dritte Verbindungseinrichtung 28 mit Vorteil durch das Raumgerät 21.1 geführt ist. In der ersten Variante dient das Raumgerät 21.1 als Verbindungsgerät für einen über die erste Verbindungseinrichtung 25, die Schnittstelle 26 und den Anschluss 15 aufbaubaren Kommunikationskanal zwischen der Serviceeinrichtung 23 und der Regel- und Steuereinrichtung. In der zweiten Variante ist der Kommunikationskanal über die zweite Verbindungseinrichtung 27, das Übertragungsmedium 17 und den Anschluss 13 aufbaubar. In der dritten Variante weist einer der Schnittstellenblöcke 12 bzw. 14 den Serviceanschluss 29 auf und der Kommunikationskanal zwischen der Serviceeinrichtung 23 und der Regel- und Steuereinrichtung ist über die dritte Verbindungseinrichtung 28 und den Serviceanschluss 29 aufbaubar.

Das im allgemeinen leicht zugängliche Raumgerät 21,1 ermöglicht vorteilhafterweise in der ersten und in der dritten Variante einen leicht zugängliche Anschlussmöglichkeit für die Serviceeinrichtung 23. Die zweite Variante hat den Vorteil, dass die Serviceeinrichtung 23 grundsätzlich an einer beliebigen Stelle des Datennetzwerkes 18 anschliessbar ist, während in der dritten Variante der Kommunikationskanal zwischen der Serviceeinrichtung 23 und der Regel- und Steuereinrichtung funktional vom Anschluss 15 des Raumgerätes entkoppelt und auch unabhängig vom Datennetzwerk 18 aufbaubar ist.

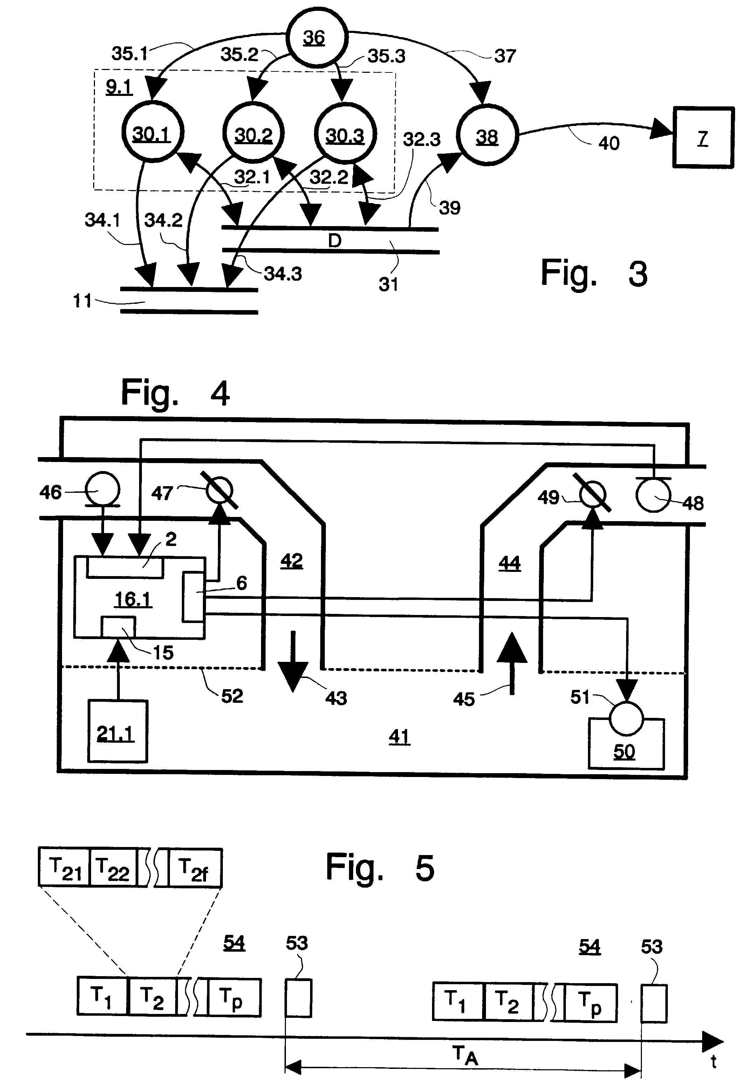

In der Fig. 3 ist ein vorteilhafter Aufbau des Energiestellpfades 9.1 bzw. 9.2 bzw. 9.3 anhand eines Datenflussdiagrammes dargestellt. In der gewählten, aus der Literatur bekannten Darstellungsart (D. J. Hatley, I. A. Pirbhai: Strategies for Real-Time System Specification, Dorset House, NY 1988) bedeutet ein Kreis eine Aktivität (activity), ein Viereck ein angrenzendes System (terminator) und ein Pfeil einen Kommunikationskanal (channel) zur Übertragung von Daten und/oder Ereignissen, wobei die Pfeilspitze in die wesentliche Datenflussrichtung zeigt. Ein Datenspeicher (Pool), der allgemein mehreren Aktivitäten zur Verfügung steht, ist durch zwei gleich lange, parallele Linien dargestellt. Im weiteren ist beispielsweise eine Anordnung aus zwei durch einen Kommunikationskanal verbundene Aktivitäten mit einer einzigen Aktivität, welche alle Aufgaben der beiden Aktivitäten erfüllt, äquivalent.

Eine Aktivität kann als elektronische Schaltung und/oder softwaremässig als Prozess, Programmstück oder Routine verwirklicht werden.

In jedem der p vorhandenen Energiestellpfade 9.1, 9.2 und 9.3 (Fig. 1) der Steuer- und Regeleinrichtung ist jeweils jedem der f Funktionsblöcke 10.1, 10.2 und 10.3 je eine Aktivität zugeordnet, durch welche die Aufgabe des entsprechenden Funktionsblockes 10.1 bzw. 10.2 bzw. 10.3 ausführbar ist. Zugunsten einer übersichtlichen Darstellung ist in der Fig. 3 nur der erste Energiestellpfad 8.1 gezeichnet, wobei die Anzahl f drei ist.

Der Energiestellpfad 9.1 bzw. 9.2 bzw. 9.3 weist also eine erste Aktivität 30.1, eine zweite Aktivität 30.2 und eine dritte Aktivität 30.3 auf. In einem ersten Pool 31 abgespeicherte Daten D sind von den Aktivitäten 30.1, 30.2 und 30.3 je über einen Kanal 32.1 bzw. 32.2 bzw. 32.3 lesbar und auch veränderbar. Die Stellwerttabelle 11 (Fig.2) ist in der Fig. 3 als ein zweiter Pool dargestellt, welcher mit den Aktivitäten 30.1 und 30.2 und 30.3 je über einen Kanal 34.1 bzw. 34.2 bzw. 34.3 verbunden ist. Im weiteren sind die Aktivitäten 30.1 und 30.2 und 30.3 des Energiestellpfades 9.1 bzw. 9.2 bzw. 9.3 je über einen Kanal 35.1 bzw. 35.2 bzw. 35.3 mit einer vierten Aktivität 36 verbunden, welche ihrerseits über einen zusätzlichen Kanal 37 mit einer fünften Aktivität 38 verbunden ist. Zusätzlich ist die fünfte Aktivität 38 über einen Kanal 39 mit dem ersten Pool 31 und über einen Kanal 40 mit dem Ausgabeblock 7 verbunden.

Die im ersten Pool 31 verfügbaren Daten D umfassen mindestens einen Teil der in der Datenschnittstelle 1 verfügbaren Datenpunkte. In einer vorteilhaften Ausführung der Energiestellpfade 9.1 bis 9.p weist der erste Pool 31 Kopien der Werte der Datenpunkte auf.

Die Fig. 4 zeigt ein technisches System, welches zumindest einen Raum 41 umfasst, welcher einen ersten Luftkanal 42 zur Zuführung eines Luftstromes 43 und auch einen zweiten Luftkanal 44 zur Wegführung eines Luftstromes 45 aufweist. Ein erster Strömungswächter 46 und eine erste steuerbare Klappe 47 sind im ersten Luftkanal 42 angeordnet, während ein zweiter Strömungswächter 48 und eine zweite steuerbare Klappe 49 im zweiten Luftkanal 44 angeordnet sind. Zusätzlich weist der Raum 41 einen Heizkörper 50 mit einem steuerbaren Ventil 51 auf.

Zur Steuerung und Regelung von Klimagrössen, insbesondere der Temperatur, ist dem Raum 41 das mit dem ersten Exemplar 21.1 des Raumgerätes verbundene erste Exemplar 16.1 der Steuer- und Regeleinrichtung zugeordnet, wobei die Steuer- und Regeleinrichtung im Beispiel über einer gestrichelt dargestellten Zwischendecke 52 des Raumes 41 angeordnet ist. Mit dem Raumgerät 21.1 ist mindestens die Temperatur des Raumes 41 erfassbar. Zur Erhöhung des erreichbaren Komforts kann das Raumgerät 21.1 einen Präsenz-Melder aufweisen, durch den der Steuer- und Regeleinheit die Anwesenheit von Personen im Raum 41 mitteilbar ist. Zur Aufnahme von Messgrössen in den beiden Luftkanälen 42 und 44 sind die beiden Strömungswächter 46 und 48 mit dem Eingang 2 verbunden. Das Ventil 51 und die beiden Klappen 47 und 49 sind am Ausgang 6 angeschlossen. Die Stellungen der beiden Klappen 47 und 49 und dadurch auch die Luftströme 43 und 45 sind durch Signale am Ausgang 6 veränderbar. Durch ein für das Ventil 51 bestimmtes Stellsignal am Ausgang 6 ist der Wärmestrom durch den Heizkörper 50 veränderbar. Die Klimagrössen des Raumes 41 sind dadurch veränderbar, dass die dem Luftaustausch und auch der Kühlung dienenden beiden Luftströme 43 und 45 entsprechend dosiert und der Wärmestrom des Heizkörpers 50 verändert wird.

Bezüglich der Funktionalität der Steuer- und Regeleinrichtung sind im Aufbau nach der Fig. 1 zwei Gruppen von Funktionseinheiten unterscheidbar: Eine erste, die Kommunikationsfunktionalität der Einrichtung mit ihrer Umgebung umfassende Gruppe, welche im wesentlichen den Eingabeblock 3, den Ausgabeblock 7 sowie die beiden Schnittstellenblöcken 12 und 14 aufweist und eine zweite, die sogenannte Heizungs-, Lüftungs- und Klimafunktionalität (HLK) umfassende Gruppe, welche im wesentlichen den Komfortregler 4 und die Energiestellpfade 9.1 bis 9.p aufweist. Die Datenschnittstelle 1 umfasst in einem Datenspeicher abgespeicherte, von mehreren Funktionseinheiten der Steuer- und Regeleinrichtung benutzbare Datenpunkte, welche Betriebszustände, erfasste, bei Bedarf mathematisch transformierte Messwerte und auch gerechnete Stellwerte aufweisen.

Der Komfortregler 4, welcher beispielsweise ein PI-Regler ist, weist eine bestimmte mit Vorteil in Software ausprogrammierte Funktionalität auf, welche anwendungsspezifisch parametrisierbar ist. So ist beispielsweise der Proportional- bzw. der Integralanteil des Regelalgorithmus während des Konfigurierungsvorganges oder in einer Servicephase verstellbar. Bei Bedarf weist der Komfortregler 4 mehrere, beispielsweise einander überlagerte Teil-Regler auf. Als Ausgangsgrössen generiert der Komfortregler 4 zeitdiskret mit Vorteil mindestens einen normierten Stellwert "Heizen" und einen normierten Stellwert "Kühlen".

In einer vorteilhaften Ausführung des Komfortreglers 4 verläuft der normierte Stellwert "Kühlen" wie auch der normierte Stellwert "Heizen" im Wertebereich von 0 bis 100%. Die normierten Stellwerte "Kühlen" und "Heizen" sind vorteilhaft als Datenpunkte des Typs Integer - also ganzzahlig mit Vorzeichen - abgespeichert. Werden pro Datenpunkt zwei Byte Speicherplatz beansprucht, ist ein Wertebereich von 0 bis 10'000 darstellbar, der insbesondere auch zum Vorteil der Benutzerfreundlichkeit beim Konfigurierungsvorgang als 0,00 bis 100,00 % interpretierbar ist.

Durch den Energiestellpfad 9.1 bzw. 9.2 bzw. 9.3 ist aus den normierten Stellwerten des Komfortreglers 4 ein anwendungsspezifisches zeitdiskretes Stellsignal generierbar, welches am Ausgang 6 verfügbar ist und dessen zeitlicher Verlauf durch die während des Konfigurierungsvorganges aus der Funktionsblock-Bibliothek ausgewählten Typen für die Funktionsblöcke 10.1, 10.2 und 10.3 bestimmt ist.

Die Funktionsblock-Bibliothek verfügt über ein auf die möglichen Anwendungen abgestimmtes Angebot an getesteten Funktionsblock-Typen, deren Wirkung genau definiert ist und die in einer mehrere Funktionsblock-Typen umfassenden Kette kombinerbar sind. Als Beispiel seien folgende Typen genannt: "Keine Funktion", "Schmitt-Trigger", "Signal-Begrenzer", "Auswahl des Minimums", "Differenz-Verstärker", "PI-Regler", "3-Punkt Synchro-Antrieb mit Hubmodell", "Signal-Verstärker". Dadurch, dass genau die Anzahl f Funktionsblock-Typen im Energiestellpfad 9.1 bzw. 9.2 bzw. 9.3 nur als Kette kombiniert werden, wobei mehrere Ketten untereinander nicht verknüpft und daher voneinander unbeeinflussbar sind, ist die Wirkung einer bestimmten Kombinationen von Funktionsblock-Typen bei der Konfiguration auf einfache Art bestimmbar, wodurch mit geringen Engineeringkosten eine grosse funktionelle Sicherheit erreichbar ist.

In einer vorteilhaften Konfigurierung des in der Fig. 4 dargestellten Beispieles weist die erste Datenpunkt-Gruppe 8.1 den vom Komfortregler 4 erzeugten normierten Stellwert "Heizen" auf, während die zweite Datenpunkt-Gruppe 8.2 und die dritte Datenpunkt-Gruppe 8.3 den normierten Stellwert "Kühlen" aufweisen. Im ersten Energiestellpfad 9.1 sind der erste Funktionsblock 10.1 und der zweite Funktionsblock 10.2 vom Typ "Keine Funktion" während der dritte Funktionsblock 10.3 vom Typ "Puls-Weiten-Steuerung" ist. Im zweiten Energiestellpfad 9.2 wie auch im dritten Energiestellpfad 9.3 ist der erste Funktionsblock 10.1 jeweils vom Typ "Signal-Begrenzer", der zweite Funktionsblock 10.2 jeweils vom Typ "PI-Regler" und der dritte Funktionsblock 10.3 jeweils vom Typ "3-Punkt Synchro-Antrieb mit Hubmodell", wobei der erste Energiestellpfad 9.1 das Stellsignal für das Ventil 51, der zweite Energiestellpfad 9.2 das Stellsignal für die erste Klappe 47 und der dritte Energiestellpfad 9.3 das Stellsignal für die zweite Klappe 49 erzeugt.

Mit Vorteil sind die Regelparameter des Komfortregler 4 (Fig. 2) durch die am Raumgerät 21.1 anschliessbare Serviceeinrichtung 23 (Fig. 2) veränderbar, so dass die Regel- und Steuereinrichtung 16.1 nach ihrer Inbetriebnahme auch dann mit relativ wenig Aufwand anpassbar ist, wenn sie - wie in der Fig. 4 gezeigt - über der Zwischendecke 52 montiert und daher örtlich nicht direkt zugänglich ist.

Die Stellsignale werden von der fünften Aktivität 38 (Fig. 3) periodisch mit der Periodendauer T_{A} in einem Ausgabe-Zeiffenster 53 (Fig. 5) ausgegeben. Zeitlich jeweils vor dem Ausgabe-Zeiffenster 53 werden die Aktivitäten 30.1 bis 30.f jedes Energiestellpfades 9.1 bis 9.p in einem Berechnungs-Zeiffenster 54 ausgeführt, in welchem - mit i von 1 bis p - dem Energiestellpfad 9.i ein Zeitbereich Tᵢ zugeordnet ist. Mit j von 1 bis f weist jeder Zeitbereich Tᵢ weitere Zeitbereiche Tᵢⱼ auf, wobei im Zeitbereich Tᵢⱼ die Aktivität 30.j (Fig. 3) des Energiestellpfades 9.i ausgeführt wird. Auf die Darstellung in der Fig. 1 bezogen wird im Zeitbereich Tᵢⱼ der Funktionsblock 10.j des Energiestellpfades 9.i bearbeitet.

Dadurch, dass die Stellsignale am Ausgang 6 periodisch ausgegeben werden, kann bei gewissen Stellgliedem oder Stellantrieben auf eine Rückmeldung verzichtet werden, da in der Steuer- und Regeleinrichtung in gewissen Typen der Funktionsblöcke 10.1 bis 10.f selbst ein Modell nachführbar ist.

Die Periodendauer T_{A} beträgt beispielsweise etwa 0.5 s.

Die Aktivitäten 30.1, 30.2 und 30.3 speichern berechnete Funktionsblock-Resultate einerseits im ersten Pool 31 zur Weiterverwendung durch die zeitlich nachfolgend aktive Aktivität 30.2 bzw. 30.3 bzw. 38 und andererseits in der Stellwerttabelle 11, in welcher die Funktionsblock-Resultate über den Schnittstellenblock 12 im Datennetzwerk 18 (Fig. 2) verfügbar sind.

Die den Ausgang 6 bedienende fünfte Aktivität und auch die Aktivitäten 30.1, 30.2 und 30.3 des Energiestellpfades 9.1 bzw. 9.2 bzw. 9.3 werden mit Vorteil von der vierten Aktivität 36 stimuliert. Die Aktivitäten 30.1, 30.2 und 30.3 des Energiestellpfades 9.1 bzw. 9.2 bzw. 9.3 sind vorteilhaft softwaremässig als Unterprogramm verwirklicht.

Mit Vorteil stimuliert die vierte Aktivität 36 auch den Komfortregler 4 und die Betriebszustands-Steuereinrichtung 5.

Die Steuer- und Regeleinrichtung weist für den konfigurierten Funktionsblock 10.1 bzw. 10.2 bzw. 10.3 einen gespeicherten Datenverbund (Data Record) auf, in welchem dem Funktionsblock 10.1 bzw. 10.2 bzw. 10.3 aktuelle Parameter und/oder vom Funktionsblock 10.1 bzw. 10.2 bzw. 10.3 referenzierbare Datenpunkte und auch ein Funktionscode zugeordnet sind. Mit Vorteil weist der Datenverbund die physikalische Adresse eines vom entsprechenden Funktionsblock 10.1 bzw. 10.2 bzw. 10.3 zu bearbeitenden Datenpunktes auf, während der Funktionscode dem Funktionsblock 10.1 bzw. 10.2 bzw. 10.3 mit Vorteil durch eine logische Adresse zugeordnet ist.

In einer vorteilhaften Ausführung weist die Steuer- und Regeleinheit eine Matrix M auf, welche die konfigurierten Energiestellpfade 9.1 bis 9.p übersichtlich, genau und zuverlässig beschreibt, wodurch auch eine einfach testbare und sichere Funktionsausführung der Energiestellpfade 9.1 bis 9.p unterstützt wird.

Die Matrix M ist für p Energiestellpfade 9.1 bis 9.p und jeweils f Funktionsblöcken 10.1 bis 10.f pro Energiestellpfad 9.1 bis 9.p als zweidimensionales Feld eines Varianten-Typs in der der Programmiersprache Pascal ähnlichen Programmiersprache PORTAL (Amold Businger, PORTAL Language Description, Springer Verlag, Berlin 1985) prinzipiell wie folgt beschreibbar:

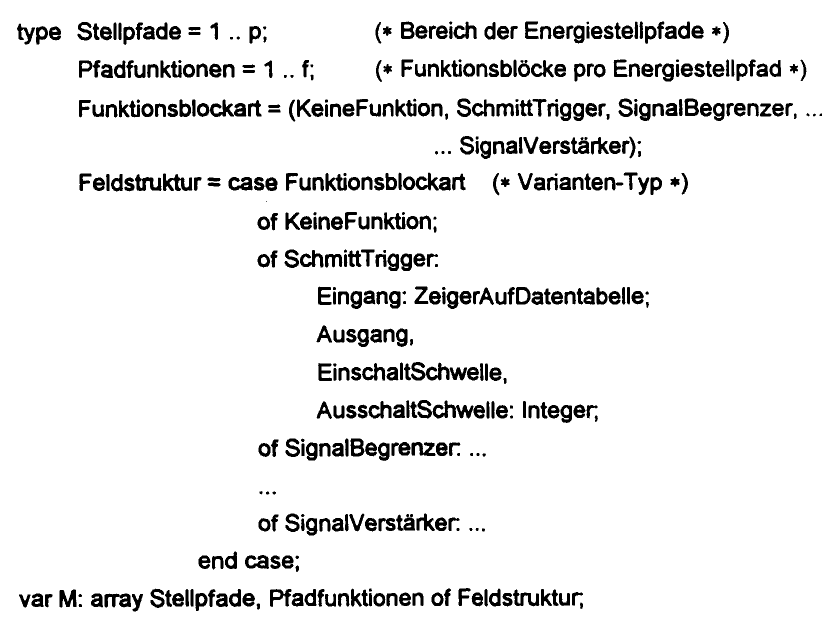

Der Datentyp "ZeigerAufDatentabelle" des Varianten-Typs "Feldstruktur" ist mit Vorteil ein Index-Typ oder ein Adress-Typ eines Datenpunktes des ersten Pools 31 (Fig. 3) oder der Datenschnittstelle 1 (Fig.1). Aufgrund des Feldes "Funktionsblockart" im Varianten-Typ "Feldstruktur", welches das sogenannte Tag-Field ist, ist bei einer Ausführung der Energiestellpfade 9.1 bis 9.p die dem konfigurierten Funktionsblock 10.1 bzw. 10.2 bzw. 10.3 entsprechende Aktivität 30.1 bzw. 30.2 bzw. 30.3 (Fig. 3) durch die die Ausführung steuernde vierte Aktivität 36 wählbar.

Durch die Aktivität 36 ist die Matrix M zeilenweise sequentiell abarbeitbar, indem jeweils der dem Matrix-Element zugeordnete Funktionscode durch die Aktivität 36 aktiviert wird, wobei nach jedem Abarbeiten der Matrix M die Stellgrösse/Stellgrössen am Ende des Energiestellpfades 9.1 bzw. 9.2 bzw. 9.3 zeitdiskret und jeweils nach der vorbestimmten Periodendauer T_{A} am Ausgang 6 verfügbar ist/sind.

Bei eingeschaltetem Komfortregler 4 (Fig. 1) sind bei der Steuer- und Regeleinrichtung mit Vorteil mindestens die Betriebszustände "Komfort", "reduzierter Komfort", "Sparbetrieb" und "Frostschutz" wählbar, welche mit Hilfe der Betriebszustands-Steuereinrichtung 5 überwacht und auch umgeschaltet werden. Mit Vorteil sind Mittel zur Umschaltung der Betriebszustände und zudem zur Aktivierung bzw. Deaktivierung des Komfortreglers 4 von der Serviceeinrichtung 23 (Fig. 2) und auch vom Leitsystem 20 aus verfügbar. Bei ausgeschaltetem Komfortregler 4 sind zudem weitere Betriebszustände wie "Lüften", "Rauchabzug", "Notfall Aus" mindestens vom Leitsystem 20 aus wählbar.

Aufgrund der über das Datennetz 18 verfügbaren Stellwerttabellen 11 (Fig. 1) der Exemplare 16.1, 16.2 und 16.k, werden im Leitsystem Optimierungsaufgaben ermöglicht, welche zu einer dem Energieverbrauch besser angepassten und damit sparsameren Energiebereitstellung dienen.

Zur vorteilhaften Konfigurierung der Steuer- und Regeleinrichtung sind folgende sechs Verfahrensschritte ausführbar, deren Reihenfolge bei der Konfigurierung jedoch nicht mit der hier gewählten Reihenfolge in der Aufzählung übereinstimmen muss:
- Ein erster Verfahrensschritt, in welchem die Datenpunkt-Gruppe 8.1 bzw. 8.2 bzw. 8.3 des Energiestellpfades 9.1 bzw. 9.2 bzw. 9.3 aus der Datenschnittstelle 1 ausgewählt wird.
- Ein zweiter Verfahrensschritt, in welchem genau die Anzahl f Funktionsblöcke 10.1 bzw. 10.2 bzw. 10.3 aus der Funktionsblock-Bibliothek ausgewählt und in der im Energiestellpfad 9.1 bzw. 9.2 bzw. 9.3 gewünschten Reihenfolge miteinander verknüpft werden, wobei allfällige Lücken durch die Wahl des Typs "Keine Funktion" schliessbar sind.
- Ein dritter Verfahrensschritt, in welchem Klemmen des Ausgangs 6 dem Energiestellpfad 9.1 bzw. 9.2 bzw. 9.3 ausgangsseitig zugeordnet werden.
- Ein vierter Verfahrensschritt, in welchem die Funktionsblöcke 10.1 bzw. 10.2 bzw. 10.3 bei Bedarf ausgangsseitig mit der Stellwerttabelle 11 verbunden werden.
- Ein fünfter Verfahrensschritt, in welchem die Werte der notwendigen Parameter der Funktionsblöcke 10.1 bzw. 10.2 bzw. 10.3 eingestellt werden.
- Ein sechster Verfahrensschritt, in welchem die notwendigen Parameter des Komfortreglers 4 festgelegt werden.

Dadurch, dass die Steuer- und Regeleinrichtung mindestens einen konfigurierbaren Energiestellpfad 9.1 bzw. 9.2 bzw. 9.3 und einen im wesentlichen vorbestimmten Komfortregler 4 aufweist, der Energiestellpfad 9.1 bzw. 9.2 bzw. 9.3 eine fixe Anzahl f sequentiell kombinierter Funktionsblöcke 10.1 bis 10.f umfasst und der Komfortregler 4 normierte Ausgangsgrössen erzeugt, aus welchen im Energiestellpfad 9.1 bzw. 9.2 bzw. 9.3 die erforderlichen Stellgrössen erzeugt werden, ist die Einrichtung in der Konfigurierungsphase in einem breiten Einsatzgebiet einer speziellen Aufgabe optimal anpassbar, ohne dass in der Konfigurierungsphase eigentliche Programmierarbeit und zeitintensive durch die Programmierarbeit anfallende Testarbeit zu leisten sind. Dadurch, dass die getesteten Funktionsblöcke 10.1 bis 10.f nur als definierte und einfach überblickbare Struktur kombinierbar sind, können die in der Konfigurationsphase anfallenden Engineeringkosten relativ niedrig gehalten werden und für die konfigurierte Einrichtung ist trotzdem eine hohe Sicherheit erreichbar. Die Konfigurierung ist ohne eigentliche Programmierkenntnisse durchführbar, das heisst, zur Konfigurierung sind mit Vorteil graphische Werkzeuge - beispielsweise Bildschirm und Maus - einsetzbar.

Dadurch, dass der Energiestellpfad 9.1 bzw. 9.2 bzw. 9.3 eine fixe Anzahl f sequentiell ablaufender Funktionsblöcke 10.1 bis 10.f umfasst und damit duch die Matrix M definierbar ist, wird der zur Konfigurierung notwendige Speicherplatz minimal und bei der Programmübersetzung (Compilation) berechenbar. Durch die Beschränkung auf die Anzahl p und die Anzahl f ist für die Steuer- und Regeleinrichtung - verglichen mit einer Einrichtung mit beliebig verknüpfbaren Funktionsblöcken - wenig Speicherplatz aufzuwenden.

## Patentansprüche

1. Konfigurierbare Steuer- und Regeleinrichtung mit einem Eingang (2) für mindestens eine Messgrösse eines technischen Systems (22.1; 22.2) und einem Ausgang (6) für mindestens eine Stellgrösse des technischen Systems (22.1; 22.2), **gekennzeichnet durch**
eine mit dem Eingang (2) verbundene Datenschnittstelle (1),
einen mit der Datenschnittstelle (1) verbundenen, vordefinierte Regelparameter aufweisenden Komfortregler (4), mit welchem normierte Ausgangsgrössen für die Datenschnittstelle (1) generierbar sind,
einen den Ausgang (6) aufweisenden Ausgabeblock (7) und
mindestens einen zwischen die Datenschnittstelle (1) und den Ausgabeblock (7) geschalteten Energiestellpfad (9.1; 9.2; 9.3), der eine fixe Anzahl (f) aus einer Funktionsblock-Bibliothek auswählbare und zeitlich nacheinander ausführbare Funktionsblöcke (10.1, 10.2, 10.3) aufweist und mit dem die Stellgrösse/Stellgrössen des technischen Systems (22.1; 22.2) unter Verwendung der Ausgangsgrössen des Komfortreglers (4) erzeugbar ist/sind.

2. Steuer- und Regeleinrichtung nach Anspruch 1, **gekennzeichnet durch** einen Funktionsblock (10.1; 10.2; 10.3) der einen gespeicherten Datenverbund aufweist, in welchem dem Funktionsblock (10.1; 10.2;10.3) Parameter und/oder Datenpunkte und auch ein Funktionscode zugeordnet sind.

3. Steuer-und Regeleinrichtung nach Anspruch 1, **gekennzeichnet durch** eine zweidimensionale Matrix (M), welche für jeden Energiestellpfad (9.1; 9.2; 9.3) eine Zeile aufweist und deren Spaltenzahl gleich der Anzahl (f) der Funktionsblöcke (10.1, 10.2, 10.3) pro Energiestellpfad (9.1; 9.2; 9.3) ist, wobei einem Element der Matrix (M) genau ein konfigurierter Funktionsblock (10.1; 10.2; 10.3) zugeordnet ist und im Element Parameter und/oder Adressen von Datenpunkten und auch eine Adresse des Funktionscodes des zugeordneten Funktionsblockes (10.1; 10.2; 10.3) abgespeichert sind.

4. Steuer und Regeleinrichtung nach Anspruch 3, **gekennzeichnet durch** eine Aktivität (36), durch welche die Matrix zeilenweise sequentiell abarbeitbar ist, indem jeweils der dem Element zugeordnete Funktionscode durch die Aktivität (36) aktivierbar ist, wobei nach jedem Abarbeiten der Matrix die Stellgrösse/Stellgrössen am Ende des Energiestellpfades (9.1; 9.2; 9.3) zeitdiskret und jeweils nach einer vorbestimmten Periodendauer (T_{A}) am Ausgang (6) verfügbar ist/sind.

5. Steuer- und Regeleinrichtung nach einem der vorangehenden Ansprüche, **dadurch gekennzeichnet,**
**dass** der Funktionswert eines Funktionsblockes (10.1; 10.2; 10.3) in einer Stellwerttabelle (11) verfügbar ist und
**dass** Mittel (12, 13) vorhanden sind, durch welche die Stellwerttabelle (11) für ein externes System (20) lesbar ist.

6. Steuer- und Regeleinrichtung nach einem der vorangehenden Ansprüche, **dadurch gekennzeichnet**, dass die Regelparameter des Komfortreglers (4) über Schnittstellenblöcke (12; 14) veränderbar sind.

7. Steuer- und Regeleinrichtung nach einem der vorangehenden Ansprüche, **dadurch gekennzeichnet**, dass die Parameter der Funktionsblöcke (10.1, 10.2, 10.3) des Energiestellpfades (9.1; 9.2; 9.3) über Schnittstellenblöcke (12; 14) veränderbar sind.

## Claims

1. A configuratable control and regulating apparatus having an input (2) for at least one measurement parameter of a technical system (22.1; 22.2) and an output (6) for at least one setting parameter of the technical system (22.1; 22.2) characterised by
a data interface (1) connected to the input (2),
a comfort regulator (4) which is connected to the data interface (1) and which has predefined regulating parameters and with which standardised output values for the data interface (1) can be generated,
an output block (7) having the output (6), and
at least one energy setting path (9.1; 9.2; 9.3) which is connected between the data interface (1) and the output block (7) and which has a fixed number (f) of function blocks (10.1, 10.2, 10.3) which can be selected from a function block library and which can be performed in time succession, with which energy setting path the setting parameter/parameters of the technical system (22.1: 22.2) can be produced using the output parameters of the comfort regulator (4).

2. A control and regulating apparatus according to claim 1 characterised by a function block (10.1; 10.2; 10.3) which has a stored data array in which parameters and/or data points and also a function code are associated with the function block (10.1: 10.2; 10.3).

3. A control and regulating apparatus according to claim 1 characterised by a two-dimensional matrix (M) which has a line for each energy setting path (9.1; 9.2; 9.3) and whose number of columns is equal to the number (f) of the function blocks (10.1, 10.2, 10.3) per energy setting path (9.1; 9.2; 9.3), wherein a configured function block (10.1; 10.2; 10.3) is precisely associated with an element of the matrix (M) and stored in the element are parameters and/or addresses or data points and also an address of the function code of the associated function block (10.1; 10.2; 10.3).

4. A control and regulating apparatus according to claim 3 characterised by an activity (36) by which the matrix can be run line-wise sequentially by a procedure whereby the respective function code associated with the element is activatable by the activity (36) wherein after each running of the matrix the setting parameter/parameters is/are available at the end of the energy setting path (9.1; 9.2;9.3) in time-discrete fashion and after a respective predetermined period duration (T_{A}) at the output (6).

5. A control and regulating apparatus according to one of the preceding claims characterised in that
the function value of a function block (10.1; 10.2; 10.3) is available in a setting value table (11), and
there are provided means (12, 13) by which the setting value table (11) can be read for an external system (20).

6. A control and regulating apparatus according to one of the preceding claims characterised in that the regulating parameters of the comfort regulator (4) can be altered by way of interface blocks (12; 14).

7. A control and regulating apparatus according to one of the preceding claims characterised in that the parameters of the function blocks (10.1, 10.2, 10.3) of the energy setting path (9.1; 9.2; 9.3) can be altered by way of interface blocks (12; 14).

## Revendications

1. Dispositif configurable de commande et de régulation comportant une entrée (2) pour au moins une grandeur de mesure d'un système technique (22.1; 22.2) et une sortie (6) pour au moins une grandeur de réglage du système technique (22.1; 22.2), caractérisé par une interface de transmission de données (1), reliée à l'entrée (2),
un régulateur de confort (4), qui est relié à l'interface (1) de transmission de données et possède des paramètres de régulation prédéfinis et à l'aide duquel des grandeurs de sortie normalisées peuvent être produites pour l'interface (1) de transmission de données,
un bloc de sortie (7) comportant la sortie (6), et
au moins une voie de réglage d'énergie (9.1; 9.2; 9.3), qui est branchée entre l'interface (1) de transmission de données et le bloc de sortie (7) et qui comporte un nombre fixe (f) de blocs fonctionnels (10.1, 10.2, 10.3), pouvant être sélectionnés dans une bibliothèque de blocs fonctionnels et pouvant être exécutés successivement dans le temps, et au moyen de laquelle la ou les grandeurs de réglage du système technique (22.1; 22.2) peut/peuvent être produite(s) moyennant l'utilisation des grandeurs de sortie du régulateur de confort (4).

2. Dispositif de commande et de régulation selon la revendication 1, caractérisé par un bloc fonctionnel (10.1; 10.2; 10.3), qui possède un ensemble mémorisé de données, dans lequel des paramètres et/ou des points de données et également un code de fonction sont associés au bloc fonctionnel (10.1; 10.2; 10.3).

3. Dispositif de commande et de régulation selon la revendication 1, caractérisé par une matrice bidimensionnelle (M), qui comporte une ligne pour chaque voie de réglage d'énergie (9.1; 9.2; 9.3) et dont le nombre de colonnes est égal au nombre (f) des blocs fonctionnels (10.1; 10.2; 10.3) pour chaque voie de réglage d'énergie (9.1; 9.2; 9.3), un bloc fonctionnel configuré (10.1. 10.2; 10.3) étant associé de façon précise à un élément de la matrice (M), tandis que des paramètres et/ou des adresses de points de données et également une adresse du code de fonction du bloc fonctionnel associé (10.1; 10.2; 10.3) étant mémorisés dans l'élément.

4. Dispositif de commande et de régulation selon la revendication 3, caractérisé par une activité (36), au moyen de laquelle la matrice peut être traitée séquentiellement ligne par ligne, par le fait que respectivement le code de fonction associé à l'élément peut être activé par l'activité (36), et qu'après chaque traitement de la matrice, la ou les grandeurs de réglage est(sont) disponible(s) à l'extrémité de la voie de réglage d'énergie (9.1;9.2; 9.3), d'une manière discrète dans le temps et respectivement après une durée de période prédéterminée (T_{A}), sur la sortie (6).

5. Dispositif de commande et de régulation selon l'une des revendications précédentes, caractérisé en ce que la valeur fonctionnelle d'un bloc fonctionnel (10.1; 10.2; 10.3) est disponible dans un tableau de valeurs de réglage (11), et
que les moyens (12,13) sont prévus, qui permettent de lire le tableau de valeurs de réglage (11) pour un système externe (20).

6. Dispositif de commande et de régulation selon l'une des revendications précédentes, caractérisé en ce que les paramètres de régulation du régulateur de confort (4) peuvent être modifiés par l'intermédiaire de blocs d'interface (12;14).

7. Dispositif de commande et de régulation selon l'une des revendications précédentes, caractérisé en ce que les paramètres des blocs fonctionnels (10.1, 10.2, 10.3) de la voie de réglage d'énergie (9.1; 9.2; 9.3) peuvent être modifiés au moyen de blocs d'interface (12;14).
